# EUROPÄISCHE PATENTSCHRIFT

(11) **EP 3 205 982 B1**
(45) Veröffentlichungstag und Bekanntmachung des Hinweises auf die Patenterteilung: **18.03.2020**
(21) Anmeldenummer: 16184370.1
(22) Anmeldetag: 16.08.2016
(51) Int. Cl.: G01C 21/36, G08G 1/0967, G08G 1/0968

(54) **VERFAHREN UND NAVIGATIONSSYSTEM ZUM BEREITSTELLEN EINER PRÄDIKATIVEN NAVIGATIONSFUNKTION FÜR EIN FAHRZEUG**
METHOD AND NAVIGATION SYSTEM FOR PROVIDING A PREDICTIVE NAVIGATION FUNCTION FOR A VEHICLE
PROCEDE ET SYSTEME DE NAVIGATION DESTINE A FOURNIR UNE FONCTION DE NAVIGATION DE PREDICTION POUR UN VEHICULE AUTOMOBILE

(30) Priorität: 25.01.2016 DE 102016200985
(43) Veröffentlichungstag der Anmeldung: 16.08.2017
(73) Patentinhaber: Volkswagen Aktiengesellschaft, 38440 Wolfsburg (DE); AUDI AG, 85045 Ingolstadt (DE)
(72) Erfinder: Gerlach, Simon, 38527 Meine (DE); Oehlsen, Christoph, 38100 Braunschweig (DE); Dhar, Sagnik, San Francisco, CA 94114 (US)

(56) Entgegenhaltungen:
- DE-A1-102006 001 819
- DE-A1-102009 031 480
- DE-A1-102014 206 485

## Beschreibung

Die Erfindung betrifft ein Verfahren und ein Navigationssystem zum Bereitstellen einer prädikativen Navigationsfunktion für ein Fahrzeug.

Navigationsgeräte haben in den vergangenen Jahren zunehmende Verbreitung in Fahrzeugen gefunden und sind Gegenstand stetiger Weiterentwicklung. Insbesondere kann eine Vielzahl von Datenquellen ausgewertet werden, um eine optimale Routenführung zu gewährleisten.

Beispielsweise wird bei dem in der EP 1 580 531 A2 beschriebenen Navigationssystem eine Vielzahl von Routen zu einer Zielposition bestimmt und es werden für Abschnitte dieser Routen mittels Verkehrsdaten Vorhersagen erzeugt, wie lange eine Durchquerung jeweils dauern wird und wo Staus zu erwarten sind. Dabei wird berücksichtigt, zu welchem Zeitpunkt die Abschnitte jeweils voraussichtlich durchquert werden. Es kann eine Route so bestimmt werden, dass Abschnitte, auf denen ein Stau vorhergesagt wurde, durch eine Alternativroute umfahren werden.

Die DE 10 2007 050 154 A1 beschreibt ein Prognosesystem zum Vorhersagen von Fahrzeiten. Dabei werden Vorhersagen für Verkehrsbehinderungen erzeugt, indem die aktuellen Fahrzeiten von Fahrzeugen auf Streckenabschnitten erfasst und anhand von Mustererkennungsverfahren ausgewertet werden. Dies ermöglicht das Bestimmen einer Route unter Umfahrung von voraussichtlich auftretenden Verkehrsstörungen.

In der EP 1 422 501 A1 wird ein Anzeigesystem vorgeschlagen, bei dem in einem Zeitplan eine Position örtlich und zeitlich definiert wird. Diese Position kann auf einer Karte dargestellt werden. Es kann eine Route zu der Position erzeugt werden, wobei Stauinformationen berücksichtigt und insbesondere Vorhersagen bestimmt werden können. Bei der Anzeige kann etwa ein Symbol angezeigt werden, wenn auf einer Strecke zu einer bestimmten Zeit mit Stau zu rechnen ist, sodass der Nutzer gegebenenfalls seinen Zeitplan anpassen kann.

Das in der DE 10 2013 000 385 A1 beschriebene Navigationssystem zum Ermitteln eines Fahrroutenvorschlags für eine bevorstehende Fahrt eines Kraftfahrzeugs sieht vor, dass der Verkehrsfluss zu einem zukünftigen Zeitpunkt abgeschätzt wird. Dies geschieht mittels eines Vergleichs von Umgebungsmerkmalen, etwa die Zeit oder das Wetter, zum voraussichtlichen Fahrtzeitpunkt mit bereits bekannten Verkehrsereignissen. Beispielsweise kann so erkannt werden, dass an einer bestimmten Stelle bei bestimmten Wetterbedingungen häufig ein Stau auftritt.

Bei dem in der DE 10 2007 060 590 A1 vorgeschlagenen Verfahren zur Auswahl einer Route für eine dynamische Navigation von Individualverkehr wird die Wahrscheinlichkeit bestimmt, dass eine von zumindest zwei alternativen Routen zu einer geringeren Reisezeit führt. Anhand dieser Wahrscheinlichkeit wird die empfohlene Route ausgewählt.

Aus der DE 60 2004 012 364 T2 ist ein Leitverfahren für einen beweglichen Körper bekannt, bei dem die aktuelle Position des beweglichen Körpers, Zielinformationen über eine Position eines Ziels und Verkehrsinformationen erfasst werden. Auf Basis der aktuellen Positionsinformationen, der Zielinformationen und von Karteninformationen wird bei dem Verfahren eine Fahrtroute gesucht. Für eine Vielzahl von Fahrtrouten wird auf Basis der Verkehrsinformationen erkannt, ob sie störungsfrei sind. Zu einer Vielzahl von Fahrtrouten wird auf Basis der erkannten Störungsfreiheit ein Auswahl-Prozentsatz berechnet und auf Basis dieses Auswahl-Prozentsatzes wird eine empfohlene Fahrtroute festgelegt und mitgeteilt. Schließlich ist eine prädikative Navigationsfunktion bekannt, bei der das Navigationssystem sich die regelmäßig gefahrenen Routen merkt und diese auch ohne aktive Zielführung automatisch auf Verkehrsstörungen abscannt. Der Fahrer wird dann gewarnt, wenn auf seinen bevorzugten Routen Verkehrsstörungen vorliegen, ohne dass er hierfür die Zielführung gestartet haben muss.

Aus der DE102006001819 ist ein Verfahren zur Anzeige von Verkehrsmeldungen bekannt, wobei eine wahrscheinlichste Route bestimmt wird, auf welcher sich ein Fahrzeug bewegt, und in Abhängigkeit von dieser Route relevante Verkehrsmeldungen aus einer Vielzahl empfangener Verkehrsmeldungen herausgefiltert werden.

Der vorliegenden Erfindung liegt die Aufgabe zugrunde, ein Verfahren und ein Navigationssystem der eingangs genannten Art bereitzustellen, bei denen der Nutzer vor einer Verkehrsstörung gewarnt wird, wenn sie für ihn relevant ist, und zwar ohne dass die Warnung zu häufig und für den Fahrer zu aufdringlich erscheint.

Diese Aufgabe wird erfindungsgemäß durch ein Verfahren mit den Merkmalen des Anspruchs 1 und ein Navigationssystem mit den Merkmalen des Anspruchs 13 gelöst. Vorteilhafte Ausgestaltungen und Weiterbildungen ergeben sich aus den abhängigen Ansprüchen.

Bei dem erfindungsgemäßen Verfahren der eingangs genannten Art wird eine aktuelle Position des Fahrzeugs bestimmt. Ferner wird ohne eine Zielvorgabe eines Nutzers eine intendierte Route bestimmt, wobei für die intendierte Route eine Intentionswahrscheinlichkeit bestimmt wird. Außerdem werden Verkehrsdaten erfasst, die Störungsdaten über Verkehrsstörungen und die zugehörige Position der Verkehrsstörungen umfassen. Wenn die Intentionswahrscheinlichkeit einen Intentionsschwellenwert übersteigt, wird aus den erfassten Verkehrsdaten ermittelt, ob eine Verkehrsstörung für die bestimmte intendierte Route relevant ist. In Abhängigkeit von der Position des Fahrzeugs relativ zur Position der ermittelten Verkehrsstörung wird eine Warnung ausgegeben.

Bei dem erfindungsgemäßen Verfahren wird somit die Warnung, welche auf die für die intendierte Route relevante Verkehrsstörung hinweist, nicht ohne Weiteres ausgegeben. Die Ausgabe wird vielmehr von einer Bedingung abhängig gemacht, nämlich von der Position des Fahrzeugs relativ zur Position der ermittelten Verkehrsstörung. Vorteilhafterweise wird hierdurch sichergestellt, dass nicht zu häufig Warnungen ausgegeben werden und diese nicht zu aufdringlich für den Fahrer des Fahrzeugs sind. Gleichzeitig stellt die Bedingung vorteilhafterweise sicher, dass der Fahrer des Fahrzeugs noch die Möglichkeit hat, auf die ermittelte Verkehrsstörung zu reagieren.

Gemäß einer Ausbildung des erfindungsgemäßen Verfahrens wird die Warnung nicht dauernd, sondern bedarfsabhängig ausgegeben. Durch diese Maßnahme wird weiter sichergestellt, dass die Warnung nicht zu häufig und insbesondere erst dann ausgegeben wird, wenn es für den Fahrer notwendig ist. Der Bedarf für eine Ausgabe kann in diesem Fall zum Beispiel in Abhängigkeit von dem Abstand der aktuellen Position des Fahrzeugs zu der Position der ermittelten Verkehrsstörung ermittelt werden. Ferner fließt in die Prüfung, ob die bedarfsabhängige Ausgabe der Warnung erfolgen soll, die Intentionswahrscheinlichkeit für die bestimmte intendierte Route ein. In die Prüfung des Bedarfs kann außerdem einfließen, wie die Reaktionsmöglichkeiten des Fahrers des Fahrzeugs sind.

Die Warnung kann zunächst sehr subtil, z. B. nur als Icon z. B. in einer Kopfzeile, oder gar nicht, wenn z. B. die Entfernung bis zur Position der ermittelten Verkehrsstörung noch relativ groß ist, ausgegeben werden. Später mit zunehmender Annäherung an die Position der ermittelten Verkehrsstörung kann die Warnung dann deutlicher ausgegeben werden.

Erfindungsgemäß werden ohne eine Zielvorgabe des Nutzers mehrere intendierte Routen bestimmt, wobei für jede der intendierten Routen eine Intentionswahrscheinlichkeit bestimmt wird. Die Summe der Intentionswahrscheinlichkeiten der intendierten Routen wird berechnet, für welche eine Verkehrsstörung relevant ist. In Abhängigkeit von dieser Summe wird die Warnung ausgegeben. Durch diese Maßnahme wird erreicht, dass eine Warnung auch dann ausgegeben wird, wenn zwar für eine intendierte Route, welche bestimmt worden ist, die Intentionswahrscheinlichkeit klein ist, jedoch mehrere intendierte Routen bestimmt werden, die insgesamt zu einer hohen Intentionswahrscheinlichkeit führen und für die alle eine Verkehrsstörung relevant ist. Auf diese Weise kann die Zuverlässigkeit des Verfahrens verbessert werden.

Gemäß einer Weiterbildung des erfindungsgemäßen Verfahrens wird in Abhängigkeit von den ermittelten Verkehrsstörungen eine Alternativroute bestimmt. Anhand der intendierten Route und der Alternativroute wird eine Abweichungsposition auf der intendierten Route bestimmt, wobei an der Abweichungsposition durch ein Abweichmanöver die Alternativroute erreichbar ist. Es wird eine Alternativenausgabe erzeugt, wobei die Alternativenausgabe Informationen über die Alternativroute umfasst. Schließlich wird die Alternativenausgabe ausgegeben. Dies erfolgt bevor das Fahrzeug die Abweichungsposition erreicht hat.

Hierdurch wird vorteilhafterweise erreicht, dass die Fahrtroute bedarfsabhängig angepasst werden kann und ein Nutzer so über die Alternativroute automatisiert informiert wird, ohne dass dies als störend empfunden wird.

Erfindungsgemäß wird eine prädiktive Navigationsfunktion bereitgestellt, bei der das System automatisch erkennt, zu welchem Ziel und auf welcher intendierten Route das Fahrzeug gesteuert werden soll. Für die intendierte Route kann eine Zielposition und/oder eine Vielzahl von Zwischenzielen entlang der intendierten Route bestimmt werden. Insbesondere kann die intendierte Route mit dem genauen Streckenverlauf bestimmt werden. Die Route verläuft dabei entlang eines Streckennetzes für das Fahrzeug. Die intendierte Route wird erfindungsgemäß dann bestimmt, wenn der Nutzer kein Ziel und/oder keine Route im Navigationssystem aktiviert hat oder er das Navigationssystem überhaupt nicht verwendet. Dieser Fall wird auch als prädikative Navigation bezeichnet.

Zum Bestimmen der intendierten Route können verschiedene Verfahren verwendet werden. Beispielsweise können statistische Methoden, Lernalgorithmen oder Daten eines Terminplans verwendet werden. Dabei wird erfindungsgemäß eine Intentionswahrscheinlichkeit bestimmt, die quantifiziert, mit welcher Sicherheit die intendierte Route bestimmt wurde. Insbesondere kann die Intentionswahrscheinlichkeit durch einen Zahlenwert angegeben werden, wobei dieser Wert umso höher ist, je sicherer die intendierte Route bestimmt wurde.

Erfindungsgemäß wird die Intentionswahrscheinlichkeit mit einem Intentionsschwellenwert verglichen und die Route wird nur dann berücksichtigt, wenn sie mit ausreichender Sicherheit als intendierte Route erkannt wurde. Es wird also vermieden, dass der Nutzer von Meldungen zu einer möglicherweise irrelevanten Route gestört wird. Dabei kann der Intentionsschwellenwert statisch vorbestimmt sein oder dynamisch bestimmt werden, etwa in Abhängigkeit von der Länge der intendierten Route. Ferner kann vorgesehen sein, dass der Intentionsschwellenwert durch eine Eingabe des Nutzers eingestellt werden kann.

Die erkannte Route kann dann beispielsweise auf Verkehrsstörungen überwacht werden und diese können gegebenenfalls ausgegeben werden, ohne dass zuvor eine Navigationsplanung durch den Nutzer erfolgen muss. Das erfindungsgemäße Verfahren erlaubt es bei einem solchen System, zum Beispiel Anpassungsvorschläge zu erzeugen und auszugeben.

Die Überwachung der Verkehrssituation kann auf verschiedene, an sich bekannte Weise erfolgen. Beispielsweise können die Verkehrsdaten über eine Funkverbindung empfangen werden, beispielsweise über eine Stauwarnanlage, Radiodienste wie den *Traffic Message Channel* (TMC) oder andere Informationsdienste, insbesondere über einen externen Server und das Internet. Die erfassten Verkehrsdaten können beispielsweise Informationen über gegenwärtige Verkehrssituationen, etwa Staus, deren Position, Ausmaße und Konsequenzen für den Verkehrsfluss umfassen. Sie können ferner Informationen über vergangene oder zu erwartende Verkehrssituationen umfassen, beispielsweise über regelmäßig sich bildende Verkehrsstörungen an bestimmten Positionen des Wegenetzes. Anhand der Verkehrsdaten kann insbesondere eine Vorhersage des Verkehrsflusses an einer bestimmten Position oder in einem bestimmten Bereich einer Route bestimmt werden, was wiederum Rückschlüsse auf die voraussichtlich benötigte Reisezeit entlang einer Route zulässt.

Gemäß der Weiterbildung der Erfindung wird in Abhängigkeit von den Verkehrsdaten eine Alternativroute bestimmt. Der Endpunkt der Alternativroute ist insbesondere die Zielposition der zuvor erkannten intendierten Route. Ferner können Zwischenziele entlang der intendierten Route berücksichtigt werden. Die Abhängigkeit von den Verkehrsdaten kann auf verschiedene Arten gestaltet sein. Beispielsweise kann die Alternativroute in Abhängigkeit von einer prognostizierten Reisezeit entlang der intendierten Route und der Alternativroute gebildet werden. Sie kann ferner in Abhängigkeit von der jeweiligen Streckenlänge und/oder anderen Parametern gebildet werden.

Dabei weicht die Alternativroute auf zumindest einem Teil der Strecke von der intendierten Route ab, es muss also ein Fahrmanöver durchgeführt werden, um von der intendierten Route auf die Alternativroute zu gelangen. Beispielsweise kann eine Verkehrsstörung auf einer Straße umfahren werden durch Verlassen der Straße bei einer Ausfahrt, Fahren einer Umleitungsstrecke und spätere Rückkehr auf die ursprüngliche Straße. In diesem Fall wird die Ausfahrt als Abweichungsposition bestimmt, da hier ein Abweichen von der intendierten Route durchgeführt werden soll.

Es wird anhand der aktuellen Position des Fahrzeugs erfasst, wo sich das Fahrzeug relativ zur Abweichungsposition befindet, insbesondere wie weit es räumlich und/oder wie lange es zeitlich vom Erreichen der Abweichungsposition entfernt ist. Um dem Fahrer des Fahrzeugs eine Korrektur der befahrenen Route zu erlauben, wird eine Alternativenausgabe insbesondere vor Erreichen der Abweichungsposition so erzeugt und ausgegeben, dass Informationen über die vom System bestimmte Alternativroute rechtzeitig vom Fahrer erfasst werden können.

In modernen Fahrzeugen konkurriert typischerweise eine Fülle von Funktionen um beschränkte Ausgabemöglichkeiten, etwa die Anzeigefläche eines Kombiinstruments oder eines Infotainmentdisplays an der Mittelkonsole. Diese Funktionen können beispielsweise Einstellungen von Komponenten des Fahrzeugs, eine Navigationsfunktion, eine Multimediawiedergabe oder weitere Informationsdienste betreffen. Ferner sollen Informationen so ausgegeben werden, dass die Aufmerksamkeit des Nutzers, insbesondere des Fahrers, nicht unnötig stark beansprucht wird.

Die erfindungsgemäße Ausgabe der Warnung setzt nicht voraus, dass der Nutzer einen bestimmten Zustand der Ausgabeeinheit herstellt, etwa durch Aufrufen einer Anzeige eines Navigationsgeräts. Stattdessen kann die Ausgabe automatisch so erfolgen, dass eine Ausgabe einer anderen aktiven Funktion wenigstens zeitweise unterbrochen oder modifiziert wird. Beispielsweise kann die Anzeige einer Anzeigevorrichtung, etwa eines Kombiinstruments, Infotainmentdisplays oder Head-Up-Displays im Fahrzeug, durch ein Popup zumindest teilweise überdeckt werden, wobei innerhalb der Fläche des Popups die Warnung oder die Alternativenausgabe angezeigt wird. Ferner kann eine Audiowiedergabe, etwa eines Radios oder einer Multimedia-Wiedergabevorrichtung durch einer Sprachmeldung oder einen Signalton unterbrochen werden. Die genannten Beispiele schränken dabei die Ausgabemöglichkeiten nicht ein. Dadurch wird vorteilhafterweise die prädiktive Navigationsfunktion unterstützt, sodass der Nutzer noch weiter von Bedienschritten zum Starten, Überwachen und Modifizieren einer Route entlastet wird.

Bei einer Weiterbildung des erfindungsgemäßen Verfahrens wird ferner eine theoretische Reisezeit für die intendierte Route bestimmt und anhand der Verkehrsdaten wird eine tatsächliche Reisezeit für die intendierte Route bestimmt wird. Die Alternativroute wird dann bestimmt, wenn die tatsächliche Reisezeit die theoretische Reisezeit um zumindest einen Verspätungsschwellenwert übersteigt.

Dadurch kann das erfindungsgemäße Verfahren vorteilhafterweise genutzt werden, um durch die Alternativroute eine Verkehrsstörung zu umfahren, sofern diese zu einer relevanten Verspätung führen würde. Insbesondere kann durch eine geeignete Wahl des Verspätungsschwellenwerts das Verfahren so durchgeführt werden, dass eine Alternativroute nur dann bestimmt wird, wenn die tatsächliche Reisezeit um eine relevante Zeitdauer länger als die theoretische Reisezeit ist.

Dabei kann der Verspätungsschwellenwert statisch vorbestimmt sein oder dynamisch bestimmt werden, etwa relativ zu der gesamten Reisezeit oder der bis zum Erreichen der Zielposition verbleibenden Reisezeit. Zum Beispiel kann so berücksichtigt werden, dass eine Verspätung um eine bestimmte Zeitdauer umso größere relative Auswirkungen hat, je kürzer die gesamte beziehungsweise verbleibende Reisezeit ist. Ferner kann vorgesehen sein, dass der Verspätungsschwellenwert durch eine Eingabe des Nutzers eingestellt werden kann.

Als "Reisezeit" werden erfindungsgemäß insbesondere Daten über den zeitlichen Ablauf des Befahrens der Route verstanden, insbesondere die Zeitpunkte, zu denen die Zielposition und/oder Zwischenpositionen entlang der Route erreicht werden sowie die Dauer der Fahrt. Bei der tatsächlichen Reisezeit wird insbesondere berücksichtigt, ob und in welcher Weise eine längere Zeitdauer zum Befahren einer Strecke oder eines Streckenabschnitts benötigt wird. Bei einer Ausgestaltung wird anhand der Verkehrsdaten eine Alternativreisezeit für die Alternativroute bestimmt und die Alternativenausgabe wird erzeugt, wenn die tatsächliche Reisezeit die Alternativreisezeit um zumindest einen Differenzschwellenwert überschreitet.

Dadurch wird vorteilhafterweise sichergestellt, dass die Alternativroute berücksichtigt wird, wenn sie gegenüber der intendierten Route zu einem zeitlichen Vorteil führt. Auch der Differenzschwellenwert kann statisch vorbestimmt sein oder dynamisch bestimmt werden, etwa relativ zu der gesamten Reisezeit oder der bis zum Erreichen der Zielposition verbleibenden Reisezeit. Ferner kann vorgesehen sein, dass der Differenzschwellenwert durch eine Eingabe des Nutzers eingestellt werden kann.

Alternativ oder zusätzlich dazu können weitere unterschiedliche Parameter der intendierten Route und der Alternativroute berücksichtigt werden. Beispielsweise kann die Alternativroute berücksichtigt werden, wenn sie nicht eine bestimmte Verlängerung der zu fahrenden alternativen Strecke gegenüber der intendierten Route bedeutet. Neben der Streckenlänge kann ferner beispielsweise der Energieverbrauch auf der intendierten Route und der Alternativroute verglichen werden.

Die Alternativenausgabe kann insbesondere visuell, akustisch und/oder haptisch wahrnehmbar erfassbar sein. Dadurch kann eine besonders schnelle und einfache Erfassung durch den Nutzer sichergestellt werden. Beispielsweise können verschiedene Anzeigevorrichtungen des Fahrzeugs für eine visuell erfassbare Ausgabe genutzt werden, etwa ein Kombiinstrument, Infotainmentdisplay oder Head-Up-Display. Ferner können Audio-Wiedergabeeinrichtungen zur akustischen Ausgabe genutzt werden, etwa ein Radio oder eine Multimedia-Wiedergabeeinrichtung. Haptisch erfassbare Signale können beispielsweise durch Vibration ausgegeben werden, etwa am Lenkrad oder einem Sitz. Zudem kann auch eine trennbar datentechnisch mit dem Fahrzeug verbundene Einrichtung, etwa ein Mobiltelefon oder ein tragbarer Computer, zur Ausgabe auf verschieden wahrnehmbare Weise genutzt werden.

Bei einer Ausbildung wird anhand der Abweichungsposition eine Ausgabeposition auf der intendierten Route bestimmt und die Alternativenausgabe wird ausgegeben, wenn das Fahrzeug die Ausgabeposition erreicht.

Alternativ oder zusätzlich kann die Ausgabe in Abhängigkeit von einem zeitlichen Abstand vor Erreichen der Abweichungsposition erfolgen.

Dadurch wird vorteilhafterweise sichergestellt, dass die Ausgabe an einer geeigneten Position und/oder zu einem geeigneten Zeitpunkt erfolgt, ohne dass der Nutzer, insbesondere der Fahrer des Fahrzeugs, gestört wird. Die Ausgabe soll typischerweise erst dann erfolgen, wenn die Abweichung von der intendierten Route für den Nutzer in das Zentrum des Interesses rückt. Beispielsweise kann für den Nutzer die Beurteilung der bestimmten Alternativroute umso schwieriger sein, je weiter er von der Abweichungsposition entfernt ist.

Beispielsweise kann zur Bestimmung der Ausgabeposition ein räumlicher Abstand von der Abweichungsposition statisch bestimmt sein oder dynamisch je nach Situation bestimmt werden. Ferner kann ein Zeitabstand von der Abweichungsposition statisch oder dynamisch bestimmt sein. Dabei können ferner verschiedene Parameter berücksichtigt werden, etwa die Komplexität des Fahrmanövers, das zum Erreichen der Alternativroute notwendig ist. Beispielsweise kann die Ausgabe umso früher erfolgen, je komplexer das Fahrmanöver ist oder je unübersichtlicher die Verkehrssituation im Bereich der Abweichungsstelle ist. Der Nutzer kann dadurch situationsabhängig so informiert werden, dass er die Lage beurteilen und das erforderliche Fahrmanöver sicher durchführen kann.

Bei einer weiteren Ausbildung wird vor Erreichen der Ausgabeposition die Warnung oder eine Hinweismeldung erzeugt und ausgegeben. Dabei kann die Hinweismeldung insbesondere so gebildet sein, dass sie keine oder sehr reduzierte Informationen über die Alternativroute umfasst. Dadurch kann im Vorfeld der Ausgabe der Alternativenausgabe ein Hinweis an den Nutzer ausgegeben werden. Beispielsweise kann der Nutzer informiert werden, dass eine Verkehrsstörung vor ihm liegt und dass das System eine Alternativroute vorbereitet hat und diese zu gegebener Zeit vorschlagen wird. Beispielsweise kann ein Warnsymbol angezeigt und/oder ein Signalton ausgegeben werden. Insbesondere ist der Informationsgehalt des Warnhinweises gegenüber dem der Alternativenausgabe sehr reduziert und beansprucht lediglich geringe Aufmerksamkeit des Nutzers.

Bei einer weiteren Ausbildung wird die Alternativenausgabe durch eine Ausgabeeinheit ausgegeben, wobei vor dem Erreichen der Ausgabeposition eine von einer Routenführung unabhängige Ausgabe ausgegeben wird. Dadurch kann vorteilhafterweise ein automatisches Umschalten von einer anderen Funktionalität des Fahrzeugs erfolgen.

Beispielsweise kann die Ausgabe durch eine Anzeigeeinheit des Fahrzeugs erfolgen, etwa durch ein Infotainmentdisplay. Dieses kann zunächst eine Ausgabe für ein Radio oder eine weitere Funktion anzeigen, die nicht mit der Navigation im Zusammenhang steht. Bei Erreichen der Ausgabeposition kann die Alternativenausgabe angezeigt werden, etwa als Popup. Dies unterstützt die bequeme Bedienung der prädiktiven Navigationsfunktion.

Bei einer Weiterbildung umfasst die Alternativenausgabe Informationen zu der intendierten Route und/oder zu der Alternativroute, insbesondere zu einem ermittelten Fahrziel und/oder zu einer Differenz zwischen einer ermittelten Reisezeit für die intendierte Route und einer ermittelten Alternativreisezeit für die Alternativroute und/oder zu einer Differenz einer ermittelten Fahrtstrecke für die intendierte Route und einer ermittelten Fahrtstrecke für die Alternativroute.

Der Nutzer kann dadurch vorteilhafterweise relevante Daten zur Beurteilung der Alternativroute erfassen. Beispielsweise kann dem Nutzer angezeigt werden, von welcher intendierten Route, insbesondere mit welcher Zielposition, das System ausgeht und es kann so sichergestellt werden, dass diese richtig erkannt wurde. Ferner können etwa Daten über den Verlauf der Alternativroute ausgegeben werden, etwa eine Bezeichnung einer Straße, auf die ausgewichen werden soll. Ferner kann der Nutzer über die Auswirkungen seiner Entscheidung, von der intendierten Route auf die Alternativroute abzuweichen, informiert werden, etwa über die veränderte prognostizierte Reisezeit, die veränderte Streckenlänge und/oder den Energieverbrauch auf der Strecke. Die vorstehenden Beispiele sind nicht als abschließende Liste zu verstehen. Der Nutzer kann dann eine informierte Entscheidung darüber treffen, ob er mit der geänderten Routenführung einverstanden ist oder nicht.

Bei einer Ausbildung umfasst die Alternativenausgabe Informationen über die für die intendierte Route relevante Verkehrsstörung. Dies ermöglicht vorteilhafterweise eine Information des Nutzers über einen möglichen Grund für eine Änderung des Routenverlaufs und erleichtert dem Nutzer die Beurteilung der Situation. Beispielsweise kann der Nutzer auf einen auf der Strecke vor ihm liegenden Stau, dessen Ausmaße und dessen Auswirkungen auf die Reisezeit hingewiesen werden.

Bei einer Ausbildung wird ferner eine Nutzereingabe erfasst und es wird anhand der Nutzereingabe eine Navigation entlang der Alternativroute gestartet. Dadurch kann der Nutzer vorteilhafterweise durch eine Nutzereingabe die Änderung von der intendierten Route zur Alternativroute bestätigen. Die Nutzereingabe kann dabei nach an sich bekannten Verfahren erfolgen, etwa durch Betätigen eines Bedienelements oder eine Sprachsteuerung. Im Anschluss an die Nutzereingabe können dann insbesondere Fahranweisungen ausgegeben werden, die den Fahrer beim Führen des Fahrzeugs entlang der Alternativroute unterstützen.

Bei einer weiteren Ausbildung umfasst die Alternativenausgabe zumindest eine Schaltfläche und eine Nutzereingabe wird anhand der Schaltfläche erfasst, durch welche eine Navigation entlang der Alternativroute gestartet wird. Dies erlaubt vorteilhafterweise eine Integration einer Schaltfläche für die Nutzereingabe in die Alternativenausgabe. Insbesondere kann dies durch eine Anzeige der Alternativenausgabe auf einem Touchscreen erfolgen. In diesem Fall kann eine Schaltfläche angezeigt werden, deren Betätigung als Bestätigung oder Ablehnung der Alternativroute durch den Nutzer erfasst werden kann.

Eine Schaltfläche im Sinne der Erfindung kann etwa ein Steuerelement einer graphischen Benutzerschnittstelle sein. Eine Schaltfläche unterscheidet sich von Elementen und Flächen zur reinen Informationsanzeige, sogenannten Anzeigeelementen, darin, dass sie betätigbar ist. Beim Betätigen einer Schaltfläche mittels einer Bedienhandlung wird eine ihr zugeordnete Funktion ausgeführt. Die Funktion kann zu einer Veränderung der Informationsanzeige führen, ferner können über die Schaltfläche Einrichtungen gesteuert werden. Die Schaltelemente können somit herkömmliche mechanische Schalter ersetzen.

Ferner kann ein physisches Bedienelement, etwa ein Tastschalter, vorgesehen sein, das als Schaltfläche agiert und das zugleich eine Alternativenausgabe erlaubt, beispielsweise durch eine in das Bedienelement integrierte Anzeige. Insbesondere kann dies eine in einem Tastschalter integrierte Leuchtanzeige sein, deren Leuchtzustand eine Alternativenausgabe darstellt.

Bei einer Weiterbildung wird zumindest eine Fahranweisung für das Abweichmanöver zum Erreichen der Alternativroute erzeugt und die Alternativenausgabe umfasst die Fahranweisung. Dadurch kann der Nutzer vorteilhafterweise sofort mit der Alternativenausgabe über das Abweichmanöver informiert werden, sodass er dieses gegebenenfalls schnell und sicher ausführen kann. Beispielsweise kann eine Meldung ausgegeben werden, dass der Fahrer, falls er das Fahrzeug auf die Alternativroute führen will, die Straße an einer bestimmten Ausfahrt verlassen soll.

Bei einer Ausgestaltung wird die intendierte Route anhand von Daten einer aktuellen Fahrt und/oder Daten von in der Vergangenheit erfassten Fahrten und/oder Termindaten eines Nutzers und/oder anhand von Ereignisdaten bestimmt. Dies ermöglicht vorteilhafterweise die Implementierung verschiedener Verfahren zum Erkennen der intendierten Route. Beispielsweise können relevante Fahrziele anhand von Terminen eines Kalenders bestimmt werden, das der Nutzer mit hoher Wahrscheinlichkeit die dort angegebenen Zielorte zu einer bestimmten Zeit erreichen will. Ferner kann das System nach an sich bekannten Verfahren das Verhalten des Nutzers lernen, beispielsweise indem das Fahren einer bestimmten Route zu regelmäßigen Zeiten erfasst wird. Ferner können Ereignisdaten über Ereignisse zu bestimmten Zeiten an bestimmten Orten erfasst und ausgewertet werden. Beispielsweise kann anhand eines Veranstaltungskalenders bestimmt werden, ob in der Nähe der aktuell befahrenen Strecke eine bestimmte Veranstaltung stattfinden wird, und die intendierte Route kann so bestimmt werden, dass der Veranstaltungsort als intendiertes Ziel angenommen wird.

Zudem können bei der Erzeugung der intendierten Route vorgegebene allgemeine Regeln berücksichtigt werden, etwa zu einem typischen Verhalten. Beispielsweise können populäre Ziele in der Umgebung des Fahrzeugs erkannt werden. So kann etwa bei einer Urlaubsfahrt, während der sich das Fahrzeug in einer Umgebung weit entfernt von üblicherweise befahrenen Strecken befindet, bestimmt werden, zu welchen Sehenswürdigkeiten das Fahrzeug mit welcher Wahrscheinlichkeit gesteuert werden soll. Ferner können allgemeine Verkehrsdaten verwendet werde, um die intendierte Route so zu bestimmen, dass angenommen wird, dass der Nutzer dem allgemeinen Verkehrsstrom entlang gut ausgebauter Straßen zu folgen gedenkt, statt statistisch wenig befahrene, schmale Seitenstraßen zu verwenden.

Bei einer Ausbildung des Verfahrens wird die ermittelte Reisezeit für die intendierte Route anhand einer in der Vergangenheit erfassten Reisezeit bestimmt. Dies erlaubt vorteilhafterweise eine realistische Beurteilung der Reisezeit.

Beispielsweise kann die Reisezeit so berechnet werden, wie sie auf der intendierten Route ohne Verkehrsstörungen zu erwarten wäre. Ferner kann berücksichtigt werden, welche übliche Reisezeit der Nutzer in der Vergangenheit für die intendierte Route benötigt hat. Beispielsweise können auf der intendierten Route zu bestimmten Zeiten stets Verkehrsstörungen zu erwarten sein und das System kann beispielsweise durch an sich bekannte Lernalgorithmen erfassen, dass der Nutzer diese Verzögerungen bereits erwartet und daher nicht gewarnt werden möchte. Dabei können ferner weitere Parameter, etwa die Tageszeit, das Wetter oder der Wochentag berücksichtigt werden.

Bei einem weiteren Ausführungsbeispiel des erfindungsgemäßen Verfahrens wird anhand der intendierten Route und der Alternativroute eine Abweichungsposition auf der intendierten Route bestimmt, wobei an der Abweichungsposition durch ein Abweichmanöver die Alternativroute erreichbar ist. Es wird eine aktuelle Position des Fahrzeugs erfasst und eine Alternativenausgabe erzeugt, wobei die Alternativenausgabe Informationen über die Alternativroute umfasst. Schließlich wird die Alternativenausgabe ausgegeben, bevor das Fahrzeug die Abweichungsposition erreicht hat.

Die Ausgestaltungen und Weiterbildungen des zuerst beschriebenen Ausführungsbeispiels stellen auch Ausgestaltungen und Weiterbildungen des weiteren Ausführungsbeispiels dar. Das erfindungsgemäße Navigationssystem der eingangs genannten Art umfasst eine Erfassungseinheit, durch die eine aktuelle Position des Fahrzeugs und Verkehrsdaten erfassbar sind, wobei die Verkehrsdaten Störungsdaten über Verkehrsstörungen und die zugehörige Position der Verkehrsstörungen umfassen. Ferner umfasst das Navigationssystem eine Routenerkennungseinheit, durch die ohne eine Zielvorgabe eines Nutzers eine intendierte Route bestimmbar ist. Dabei ist für die intendierte Route eine Intentionswahrscheinlichkeit bestimmbar. Das Navigationssystem umfasst ferner eine Steuerungseinheit, durch die, wenn die Intentionswahrscheinlichkeit einen Intentionsschwellenwert übersteigt, aus den erfassten Verkehrsdaten ermittelbar ist, ob eine Verkehrsstörung für die bestimmte intendierte Route relevant ist, und eine Ausgabeeinheit, mit welcher in Abhängigkeit von der Position des Fahrzeugs relativ zur Position der ermittelten Verkehrsstörung eine Warnung ausgebbar ist.

Das erfindungsgemäße Navigationssystem kann außerdem eine Routenplanungseinheit umfassen, durch die anhand der Verkehrsdaten eine Alternativroute bestimmbar ist sowie anhand der intendierten Route und der Alternativroute eine Abweichungsposition auf der intendierten Route bestimmbar ist. Dabei ist an der Abweichungsposition durch ein Abweichmanöver die Alternativroute erreichbar. Ferner ist durch die Steuerungseinheit eine Alternativenausgabe erzeugbar, wobei die Alternativenausgabe Informationen über die Alternativroute umfasst und die Alternativenausgabe durch die Ausgabeeinheit ausgebbar ist, bevor das Fahrzeug die Abweichungsposition erreicht hat.

Das erfindungsgemäße Navigationssystem ist insbesondere ausgebildet, das vorstehend beschriebene erfindungsgemäße Verfahren zu implementieren. Das Navigationssystem weist somit dieselben Vorteile auf wie das erfindungsgemäße Verfahren.

Die Ausgabeeinheit kann beispielsweise ein Kombiinstrument, ein Head-Up-Display oder einem Infortainmentbildschirm des Fahrzeugs sein und die Alternativenausgabe kann eine visuell wahrnehmbare Anzeige umfassen. Alternativ oder zusätzlich kann die Alternativenausgabe akustisch und/oder haptisch wahrnehmbar sein.

Beispielsweise kann die Alternativenausgabe als Popup angezeigt werden. Insbesondere wird dabei vor der Ausgabe eine mit der Navigation nicht notwendigerweise in Zusammenhang stehende Anzeige ausgegeben und das Popup erscheint automatisch beim Erreichen der Ausgabeposition, wie obenstehend beschrieben.

Die Erfindung wird nun anhand von Ausführungsbeispielen mit Bezug zu den Zeichnungen erläutert.
- Figur 1: zeigt ein Ausführungsbeispiel des erfindungsgemäßen Navigationssystems für ein Fahrzeug,
- Figur 2: zeigt ein Ausführungsbeispiel des erfindungsgemäßen Verfahrens und
- Figuren 3A und 3B: zeigen Beispiele von Alternativenausgaben, die mittels des Ausführungsbeispiels des erfindungsgemäßen Verfahrens erzeugt wurden.

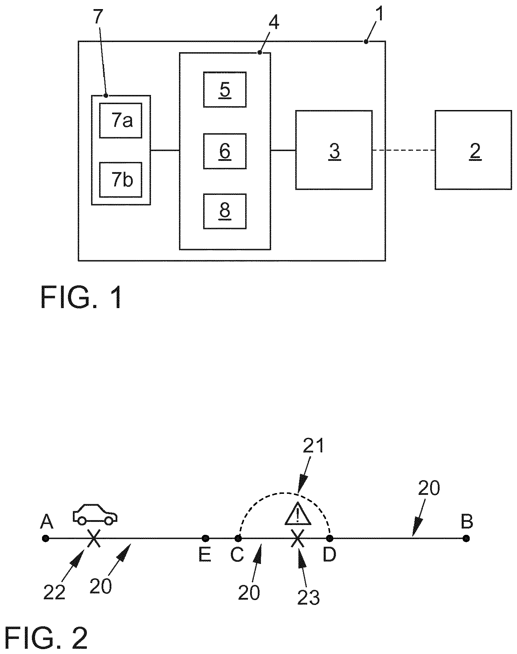

Mit Bezug zu Figur 1 wird ein Ausführungsbeispiel des erfindungsgemäßen Navigationssystems für ein Fahrzeug erläutert.

Ein Fahrzeug 1 umfasst eine Erfassungseinheit 3, die trennbar datentechnisch mit einem externen Server 2 verbunden ist. Die datentechnische Verbindung besteht zumindest zeitweise und wird auf an sich bekannte Weise hergestellt. Die datentechnische Verbindung zwischen der Erfassungseinheit 3 und dem externen Server 2 kann insbesondere drahtlos erfolgen, beispielsweise durch ein lokales Netzwerk oder ein größeres Netzwerk, beispielsweise das Internet. Ferner kann die Verbindung über ein Telekommunikationsnetz, etwa ein Telefonnetz, oder ein drahtloses lokales Netzwerk (WLAN) hergestellt werden. Ferner kann die Datenverbindung durch den Anschluss eines Datenkabels erfolgen, beispielsweise um die Verbindung über eine andere Einheit herzustellen, die selbst in einer Verbindung zu dem externen Server 2 steht. Beispielsweise kann eine datentechnische Verbindung zwischen der Erfassungseinheit 3 und einem mit dem Internet verbundenen Mobiltelefon bestehen, etwa durch ein Datenkabel oder eine Funkverbindung, etwa per Bluetooth. Insbesondere kann die Verbindung zu dem externen Server 2 über das Internet hergestellt werden.

In einem weiteren Ausführungsbeispiel erfasst die Erfassungseinheit 3 Daten über eine drahtlose Verbindung von anderen Einrichtungen, beispielsweise über Radiodienste wie den *Traffic Message Channel* (TMC) oder andere Informationsdienste, beispielsweise Stauwarnanlagen. Mit der Erfassungseinheit 3 ist eine Steuerungseinheit 4 gekoppelt, die eine Routenerkennungseinheit 5, eine Routenplanungseinheit 6 sowie ein Navigationsgerät 8 umfasst. Mit der Steuerungseinheit 4 ist ferner ein Touchscreen 7 verbunden, der eine Anzeigefläche 7a und eine berührungsempfindliche Oberfläche 7b umfasst.

Beispielsweise kann die berührungsempfindliche Oberfläche 7b eine Folie umfassen, die über der Anzeigefläche 7a angeordnet ist, wobei durch die Folie die Position einer Berührung eines Betätigungsobjekts detektiert werden kann. Insbesondere handelt es sich bei dem Betätigungsobjekt um die Fingerspitze eines Nutzers. Die Folie kann zum Beispiel als resistive Touch-Folie, kapazitive Touch-Folie oder piezoelektrische Folie ausgebildet sein. Ferner kann die Folie so ausgebildet sein, dass ein Wärmestrom, der zum Beispiel von der Fingerspitze eines Nutzers ausgeht, gemessen wird. Aus der zeitlichen Entwicklung der Berührung der Folie lassen sich verschiedene Eingaben gewinnen. Beispielsweise kann im einfachsten Fall das Berühren der Folie bei einer bestimmten Position erfasst und einem auf der Anzeigefläche 7a angezeigten grafischen Objekt zugeordnet werden. Des Weiteren kann die Dauer der Berührung bei einer bestimmten Position oder innerhalb eines bestimmten Bereichs erfasst werden.

Ferner erfasst die Erfassungseinheit 3 durch ein Positionierungssystem die aktuelle Position des Fahrzeugs 1, beispielsweise durch das *Global Positioning System* (GPS) oder vergleichbare Systeme.

Mit Bezug zu den Figuren 1 und 2 wird ein Ausführungsbeispiel des erfindungsgemäßen Verfahrens erläutert. Dabei wird insbesondere von dem oben mit Bezug zu Figur 1 erläuterten Ausführungsbeispiel des erfindungsgemäßen Navigationssystems ausgegangen.

Es wird dabei unterstellt, dass der Nutzer zwar die Funktion zur adaptiven Routenführung aktiviert hat, das Navigationssystem ansonsten jedoch nicht aktiv ist. Der Nutzer hat insbesondere kein Ziel für eine Routenführung eingegeben.

Ein Nutzer ist mit dem Fahrzeug 1 auf dem Weg von einer Startposition A zu einer Zielposition B. Das Fahrzeug 1 wird dabei entlang eines Wegenetzes geführt, wobei fortlaufend durch die Erfassungseinheit 3 des Fahrzeugs 1 eine aktuelle Position 22 des Fahrzeugs 1 erfasst wird. Durch die Routenerkennungseinheit 5 des Fahrzeugs 1 wird anhand des Verlaufs der aktuellen Position 22 eine intendierte Route 20 erkannt. In dem dargestellten Ausführungsbeispiel greift die Routenerkennungseinheit 5 auf Daten zu vergangenen Fahrten des Fahrzeugs 1 zurück, aus denen hervorgeht, dass der Nutzer in regelmäßigen Abständen entlang der Route 20 von der Startposition A zur Zielposition B fährt. Die Verarbeitung der so erfassten Daten erfolgt anhand von Lernalgorithmen und Verfahren zur Vorhersage einer wahrscheinlich gerade befahrenen intendierten Route 20. Dabei wird ferner eine Intentionswahrscheinlichkeit bestimmt, die angibt, mit welcher Sicherheit die intendierte Route 20 bestimmt wurde, das heißt, mit welcher Wahrscheinlichkeit der Nutzer beabsichtigt, das Fahrzeug 1 entlang der intendierten Route 20 zur Zielposition B zu fahren.

In weiteren Ausführungsbeispielen kann die Erkennung der intendierten Route 20 alternativ oder zusätzlich anhand verschiedener Daten erfolgen, beispielsweise kann ein elektronischer Terminkalender des Nutzer berücksichtigt werden.

Wurde die intendierte Route 20 mit ausreichend hoher Wahrscheinlichkeit bestimmt, das heißt, falls die Intentionswahrscheinlichkeit einen bestimmten Schwellenwert übersteigt, so wird im Folgenden davon ausgegangen, dass eine korrekte intendierte Route 20 erkannt wurde. In dem dargestellten Beispiel befindet sich das Fahrzeug 1 an der aktuellen Position 22.

Durch die Erfassungseinheit 3 werden von dem externen Server 2 Verkehrsdaten erfasst. Diese umfassen Störungsdaten, die im dargestellten Beispiel einen Stau an einer Verkehrsstörungsposition 23 umfassen. Wenn die Intentionswahrscheinlichkeit den Intentionsschwellenwert überstiegen hat, d. h. davon ausgegangen wird, dass eine korrekte intendierte Route 20 erkannt wurde, wird aus den erfassten Verkehrsdaten ermittelt, ob eine Verkehrsstörung für die bestimmte intendierte Route 20 relevant ist.

Wenn eine Verkehrsstörung für die intendierte Route 20 relevant ist, wird in Abhängigkeit von der Position des Fahrzeugs 1 relativ zur Position 23 der ermittelten Verkehrsstörung eine Warnung ausgegeben. Diese Warnung weist den Fahrer darauf hin, dass auf der intendierten Route 20, welche bestimmt worden ist, eine Verkehrsstörung vorliegt. Diese Warnung wird jedoch nur dann ausgegeben, wenn der Abstand der Position des Fahrzeugs 1 von der Position 23 der ermittelten Verkehrsstörung geringer als ein Schwellenwert ist.

Alternativ zu der Ausgabe der Warnung oder zusätzlich zu der Ausgabe der Warnung werden eine theoretische Reisezeit und eine tatsächliche Reisezeit bestimmt, um die Auswirkungen der Verkehrsstörung zu beurteilen. Dabei wird die theoretische Reisezeit so bestimmt, wie sie zu erwarten wäre, könnte das Fahrzeug 1 entlang der intendierte Route 20 ohne Verkehrsstörungen fahren. Alternativ dazu kann die theoretische Reisezeit anhand gelernter Daten bestimmt werden, beispielsweise anhand von Daten über die Dauer von Fahrten in der Vergangenheit. Damit kann ein Wert für die Reisezeit ermittelt werden, der den Erwartungen des Nutzers eher entspricht als eine theoretische Reisezeit unter idealisierten Bedingungen. Die tatsächliche Reisezeit wird unter Berücksichtigung der Verkehrsstörung berechnet, das heißt, sie verlängert sich durch einen an der Verkehrsstörungsposition 23 zu erwartenden Stau auf der intendierten Route 20. Um zu beurteilen, ob die Verkehrsstörung eine Anpassung der Fahrt erforderlich macht, wird die Differenz zwischen der theoretischen und der tatsächlichen Reisezeit mit einem Schwellenwert verglichen. Das heißt, unwesentliche Verzögerungen können ignoriert werden. Überschreitet die Verzögerung durch die Verkehrsstörung einen bestimmten Verzögerungsschwellenwert, so wird eine Alternativroute 21 bestimmt.

In dem dargestellten Ausführungsbeispiel weicht die Alternativroute 21 zwischen einer Abweichungsposition C und einer Rückkehrposition D von der intendierten Route 20 ab. Das heißt, die Verkehrsstörungsposition 23 wird umfahren, indem an der Abweichungsposition C die intendierte Route 20 verlassen wird, wobei die damit eingeschlagene Alternativroute 21 an der Rückkehrposition D auf die intendierte Route 20 zurückführt.

Um zu bewerten, ob die Alternativroute 21 eine relevante Verbesserung der Reise bedeutet, wird eine Alternativreisezeit für die Alternativroute 21 bestimmt, wobei gegebenenfalls auch Verkehrsstörungen auf der Alternativroute 21 berücksichtigt werden. Die Alternativreisezeit wird mit der zuvor bestimmten tatsächlichen Reisezeit verglichen und die Alternativroute wird als zu bevorzugende Route erkannt, wenn die Differenz der Reisezeiten einen bestimmten Differenzschwellenwert überschreitet. Es soll in diesem Fall dem Fahrer des Fahrzeugs 1 vorgeschlagen werden, auf die Alternativroute 21 auszuweichen.

In einem weiteren Ausführungsbeispiel wird ferner bestimmt, ob und in welchem Maße das Ausweichen auf die Alternativroute 21 eine Verlängerung der zu fahrenden Strecke gegenüber der intendierten Route 20 bedeutet. Ferner kann eine Änderung des Energiebedarfs für die Reise berücksichtigt werden.

In einem weiteren Schritt wird eine Ausgabeposition E bestimmt, die sich auf der intendierten Route 20 vor der Abweichungsposition C befindet. In dem dargestellten Ausführungsbeispiel wird die Ausgabeposition E anhand eines vorgegebenes Abstands, beispielsweise 1 km, vor der Abweichungsposition C bestimmt. Dabei ist die Abweichungsposition C diejenige Position entlang der intendierten Route 20, bei welcher der Fahrer des Fahrzeugs 1 ein Abweichmanöver ausführen muss, wenn er auf die Alternativroute 21 wechseln möchte. Beispielsweise kann dies eine Ausfahrt einer Autobahn sein.

In weiteren Ausführungsbeispielen kann alternativ oder zusätzlich zur räumlichen Distanz von der Abweichungsposition C die Ausgabeposition E anhand eines zeitlichen Abstands bestimmt werden. Ferner kann berücksichtigt werden, wie das Abweichmanöver gestaltet ist, beispielsweise kann die Ausgabeposition E für ein komplexeres Abweichmanöver in größerem Abstand bestimmt werden, um dem Nutzer mehr Zeit zur Vorbereitung zu gewähren.

Wenn eine vorteilhafte Alternativroute 21 bestimmt wurde, so wird dies im dargestellten Ausführungsbeispiel durch ein Warnsymbol auf der Anzeigefläche 7a des Touchscreens 7 dargestellt. Im dargestellten Beispiel wird dieses Warnsymbol bereits vor Erreichen der Ausgabeposition E angezeigt.

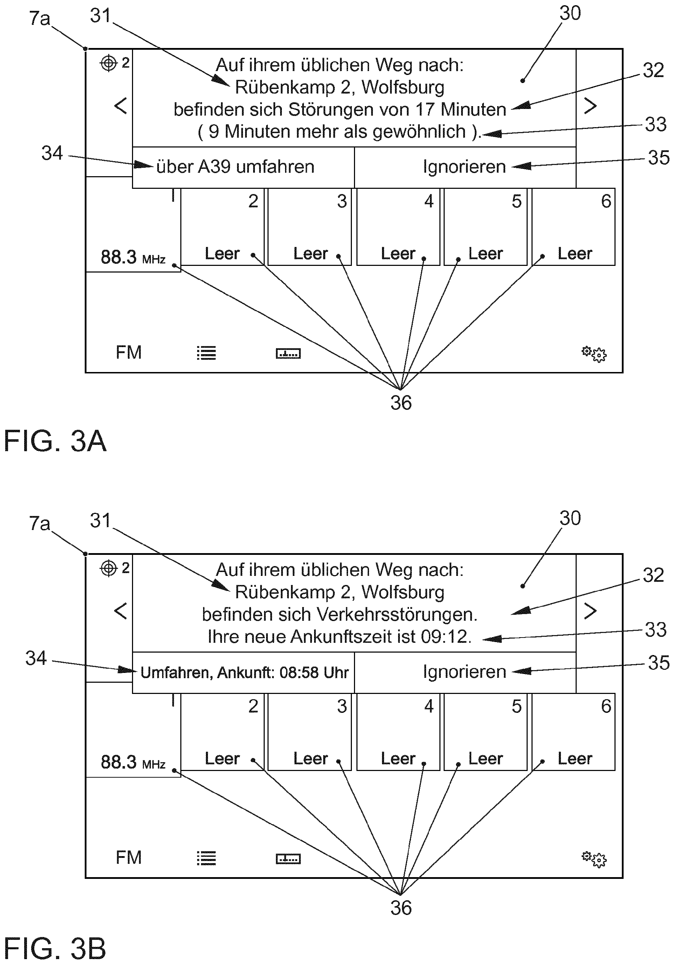

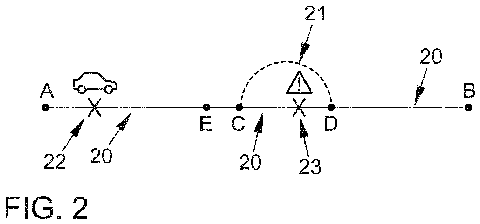

Erreicht das Fahrzeug 1 schließlich die Ausgabeposition E, so wird eine Alternativenausgabe 30 erzeugt und ebenfalls durch die Anzeigeflächen 7a des Touchscreens 7 ausgegeben. Die Alternativenausgabe 30 umfasst eine Schaltfläche, durch deren Betätigung der Nutzer mittels der berührungsempfindlichen Oberfläche 7b des Touchscreens 7 eine Nutzereingabe tätigen kann, durch die die vorgeschlagene Alternativroute 21 angenommen oder abgelehnt werden kann. Die Alternativenausgabe 30 wird unten mit Bezug zu den Figuren 3A und 3B näher erläutert. Falls der Nutzer durch seine Nutzereingabe die vorgeschlagene Alternativroute 21 bestätigt hat, so wird durch das Navigationsgerät 8 ein Fahrhinweis erzeugt, der dem Nutzer signalisiert, durch welches Abweichmanöver er das Fahrzeug 1 auf die Alternativroute 21 führen kann. Beispielsweise wird dem Nutzer angezeigt, dass er die Ausfahrt der Autobahn an der Abweichposition C nehmen soll.

Mit Bezug zu den Figuren 3A und 3B werden Beispiele von Alternativenausgaben, die mittels des Ausführungsbeispiels des erfindungsgemäßen Verfahrens erzeugt wurden, erläutert. Dabei wird von dem oben beschriebenen Ausführungsbeispiel des erfindungsgemäßen Navigationssystems und von dem oben beschriebenen Ausführungsbeispiel des erfindungsgemäßen Verfahrens ausgegangen.

Dargestellt ist jeweils die Anzeigefläche 7a des Touchscreens 7 mit einer Anzeige, die im Hintergrund vollständig von einer Anzeige einer Radiofunktion des Fahrzeugs 1 ausgefüllt ist. Diese Anzeige umfasst unter anderem Schaltflächen 36 für fest eingestellte Radiosender, wobei eine erste Schaltfläche als aktueller Radiosender hervorgehoben ist.

Die Anzeige ist jeweils durch ein Popup 30 im oberen mittleren Bereich der Anzeigefläche 7a überlagert, wobei das Popup 30 die Alternativenausgabe 30 darstellt. Das Popup 30 umfasst jeweils eine Textmeldung 31, welche die Zielposition B der intendierten Route 20 angibt. Sie umfasst ferner eine Textmeldung 32, durch die der Nutzer über das Vorliegen einer Verkehrsstörung informiert wird. Ferner werden Konsequenzen der Verkehrsstörungen durch eine Textmeldung 33 angegeben. Das Popup 30 umfasst ferner eine Schaltfläche 34, durch deren Betätigung der Nutzer die vorgeschlagene Alternativroute 21 bestätigen kann, sowie eine Schaltfläche 35, durch deren Betätigung der Nutzer die vorgeschlagene Alternativroute 21 ablehnen beziehungsweise ignorieren kann. Die in den Figuren 3A und 3B dargestellten Popups 30 unterscheiden sich in ihrem Informationsgehalt.

Bei dem in Figur 3A dargestellten Popup 30 wird in der Textmeldung 31 als Zielposition B die Adresse "Rübenkamp 2, Wolfsburg" identifiziert. Es wird ferner in den Textmeldungen 32 und 33 zu der Verkehrsstörung und den Auswirkungen darauf hingewiesen, dass Störungen von 17 Minuten vorliegen und dass dies eine Verzögerung von 9 Minuten gegenüber der gewöhnlichen Reisezeit bedeutet. Die Beschriftung der Schaltfläche 34 zum Umfahren einer Verkehrsstörung ist so beschriftet, dass der Nutzer erfassen kann, dass die Alternativroute 21 über die Autobahn "A39" führt. Die Schaltfläche 35 zum Ablehnen der Alternativroute 21 ist mit "Ignorieren" besch riftet.

Bei dem in Figur 3B dargestellten Popup 30 wird der Nutzer ebenfalls darauf hingewiesen, dass das System davon ausgeht, dass das Ziel der intendierten Route 20 die Adresse "Rübenkampf 2, Wolfsburg" lautet. Ferner wird durch die Textmeldung 32 auf das Vorliegen von Verkehrsstörungen hingewiesen. Die Textmeldung 33 über die Auswirkungen der Verkehrsstörungen informiert darüber, dass die neu berechnete Ankunftszeit 9:12 Uhr ist. Im Gegensatz zu der in Figur 3A dargestellten Alternativenausgabe 30 wird hier also nicht auf den Betrag der Verspätung hingewiesen, sondern es wird die neue Ankunftszeit ausgegeben. Ferner ist die Schaltfläche 34 zum Annehmen der vorgeschlagenen Alternativroute 21 so beschriftet, dass der Nutzer erfassen kann, dass die Ankunftszeit der Alternativroute 21 als 8:58 Uhr berechnet wurde. Die Schaltfläche 35 zum Ablehnen der vorgeschlagenen Alternativroute 21 ist wiederum mit "Ignorieren" beschriftet.

In beiden Fällen kann der Nutzer durch Betätigen der Schaltfläche "Ignorieren" 35 die Alternativroute 21 ablehnen. Es wird dann weiter davon ausgegangen, dass der Nutzer entlang der intendierten Route 20 fahren will. Nimmt der Nutzer dagegen durch Betätigen der Schaltfläche "Umfahren" 34 die vorgeschlagene Alternativroute 21 an, so wird er durch das Navigationsgerät 8 des Fahrzeugs 1 entlang der Alternativroute 21 geführt. Dabei werden auf an sich bekannte Weise insbesondere Hinweise auf Fahrmanöver ausgegeben, die der Nutzer durchführen muss, um die Alternativroute 21 zu befahren.

### Bezugszeichenliste

- 1: Fahrzeug
- 2: Externer Server
- 3: Erfassungseinheit
- 4: Steuerungseinheit
- 5: Routenerkennungseinheit
- 6: Routenplanungseinheit
- 7: Touchscreen
- 7a: Anzeigefläche
- 7b: Berührungsempfindliche Oberfläche
- 8: Navigationsgerät
- 20: Intendierte Route
- 21: Alternativroute
- 22: Aktuelle Position des Fahrzeugs
- 23: Verkehrsstörungsposition
- 30: Alternativenausgabe; Popup
- 31: Textmeldung "Zielposition"
- 32: Textmeldung "Verkehrsstörung"
- 33: Textmeldung "Auswirkungen"
- 34: Schaltfläche "Umfahren"
- 35: Schaltfläche "Ignorieren"
- 36: Schaltflächen "Radiosender"
- A: Startposition
- B: Zielposition
- C: Abweichungsposition
- D: Rückkehrposition
- E: Ausgabeposition

## Patentansprüche

1. Verfahren zum Bereitstellen einer prädikativen Navigationsfunktion für ein Fahrzeug (1), bei dem
eine aktuelle Position (22) des Fahrzeugs (1) erfasst wird,
ohne eine Zielvorgabe eines Nutzers eine intendierte Route (20) bestimmt wird, wobei für die intendierte Route (20) eine Intentionswahrscheinlichkeit bestimmt wird,
Verkehrsdaten erfasst werden, die Störungsdaten über Verkehrsstörungen und die zugehörige Position (23) der Verkehrsstörungen umfassen,
wenn die Intentionswahrscheinlichkeit einen Intentionsschwellenwert übersteigt, aus den erfassten Verkehrsdaten ermittelt wird, ob eine Verkehrsstörung für die bestimmte intendierte Route (20) relevant ist, und
in Abhängigkeit von der Position des Fahrzeugs relativ zur Position (23) der ermittelten Verkehrsstörung eine Warnung ausgegeben wird, wobei
ohne eine Zielvorgabe des Nutzers mehrere intendierte Routen (20) bestimmt werden, wobei für jede der intendierten Routen (20) eine Intentionswahrscheinlichkeit bestimmt wird,
**dadurch gekennzeichnet, dass**
die Summe der Intentionswahrscheinlichkeiten der intendierten Routen (20) berechnet wird, für welche eine Verkehrsstörung relevant ist, und
in Abhängigkeit von dieser Summe die Warnung ausgegeben wird.

2. Verfahren nach Anspruch 1,
**dadurch gekennzeichnet, dass**
die Warnung nicht dauernd sondern bedarfsabhängig ausgegeben wird, wobei der Bedarf für die Ausgabe in Abhängigkeit von der Intentionswahrscheinlichkeit für die bestimmte intendierte Route (20) ermittelt wird.

3. Verfahren nach einem der vorhergehenden Ansprüche,
**dadurch gekennzeichnet, dass**
in Abhängigkeit von den ermittelten Verkehrsstörungen eine Alternativroute (21) bestimmt wird,
anhand der bestimmten intendierten Route (20) und der Alternativroute (21) eine Abweichungsposition (C) auf der intendierten Route (20) bestimmt wird, wobei an der Abweichungsposition (C) durch ein Abweichmanöver die Alternativroute (21) erreichbar ist,
eine Alternativenausgabe (30) erzeugt wird, wobei die Alternativenausgabe (30) Informationen über die Alternativroute (21) umfasst, und
die Alternativenausgabe (30) ausgegeben wird.

4. Verfahren nach Anspruch 3,
**dadurch gekennzeichnet, dass**
anhand der Abweichungsposition (C) eine Ausgabeposition (E) auf der intendierten Route (20) bestimmt wird und
die Alternativenausgabe (30) ausgegeben wird, wenn das Fahrzeug (1) die Ausgabeposition (E) erreicht.

5. Verfahren nach Anspruch 4,
**dadurch gekennzeichnet, dass**
vor Erreichen der Ausgabeposition (E) die Warnung oder eine Hinweismeldung erzeugt und ausgegeben wird.

6. Verfahren nach Anspruch 4 oder 5,
**dadurch gekennzeichnet, dass**
die Alternativenausgabe (30) durch eine Ausgabeeinheit (7a) ausgegeben wird, wobei vor dem Erreichen der Ausgabeposition (E) eine von einer Routenführung unabhängige Ausgabe ausgegeben wird, wobei ein Warnsymbol angezeigt wird.

7. Verfahren nach einem der Ansprüche 3 bis 6,
**dadurch gekennzeichnet, dass**
die Alternativenausgabe (30) Informationen zu der intendierten Route (20) und/oder zu der Alternativroute (21) umfasst, insbesondere zu einem ermittelten Fahrziel (B) und/oder zu einer Differenz zwischen einer ermittelten Reisezeit für die intendierte Route (20) und einer ermittelten Alternativreisezeit für die Alternativroute (21) und/oder zu einer Differenz einer ermittelten Fahrtstrecke für die intendierte Route (20) und einer ermittelten Fahrtstrecke für die Alternativroute (21).

8. Verfahren nach einem der Ansprüche 3 bis 7,
**dadurch gekennzeichnet, dass**
die Alternativenausgabe (30) Informationen über die für die intendierte Route (20) relevante Verkehrsstörung (23) umfasst.

9. Verfahren nach Anspruch 8,
**dadurch gekennzeichnet, dass**
die Alternativenausgabe (30) zumindest eine Schaltfläche (34, 35) umfasst und
eine Nutzereingabe anhand der Schaltfläche (34, 35) erfasst wird, durch welche eine Navigation entlang der Alternativroute (21) gestartet wird.

10. Verfahren nach einem der Ansprüche 3 bis 9,
**dadurch gekennzeichnet, dass**
zumindest eine Fahranweisung für das Abweichmanöver zum Erreichen der Alternativroute (21) erzeugt wird und
die Alternativenausgabe (30) die Fahranweisung umfasst.

11. Verfahren nach einem der vorhergehenden Ansprüche,
**dadurch gekennzeichnet, dass**
die intendierte Route (20) anhand von Daten einer aktuellen Fahrt und/oder Daten von in der Vergangenheit erfassten Fahrten und/oder Termindaten eines Nutzers und/oder anhand von Ereignisdaten bestimmt wird.

12. Verfahren nach einem der Ansprüche 7 bis 11,
**dadurch gekennzeichnet, dass**
die ermittelte Reisezeit für die intendierte Route (20) anhand einer in der Vergangenheit erfassten Reisezeit bestimmt wird.

13. Navigationssystem zum Bereitstellen einer adaptiven Routenführung für ein Fahrzeug (1) mit
einer Erfassungseinheit (3), durch die eine aktuelle Position (22) des Fahrzeugs (1) und Verkehrsdaten erfassbar sind, wobei die Verkehrsdaten Störungsdaten über Verkehrsstörungen und die zugehörige Position (23) der Verkehrsstörungen umfassen;
einer Routenerkennungseinheit (5), durch die ohne eine Zielvorgabe eines Nutzers eine intendierte Route (20) bestimmbar ist, wobei für die intendierte Route (20) eine Intentionswahrscheinlichkeit bestimmbar ist;
einer Steuerungseinheit (4), durch die, wenn die Intentionswahrscheinlichkeit einen Intentionsschwellenwert übersteigt, aus den erfassten Verkehrsdaten ermittelbar ist, ob eine Verkehrsstörung für die bestimmte intendierte Route (20) relevant ist, und
eine Ausgabeeinheit (7a), mit welcher in Abhängigkeit von der Position des Fahrzeugs relativ zur Position (23) der ermittelten Verkehrsstörung eine Warnung ausgebbar ist, wobei
die Steuereinheit (4) dazu eingerichtet ist, ohne eine Zielvorgabe des Nutzers mehrere intendierte Routen (20) zu bestimmen, wobei für jede der intendierten Routen (20) eine Intentionswahrscheinlichkeit bestimmt wird,
**dadurch gekennzeichnet, dass**
die Steuereinheit (4) ferner dazu eingerichtet ist, die Summe der Intentionswahrscheinlichkeiten der intendierten Routen (20) zu berechnen, für welche eine Verkehrsstörung relevant ist, und
die Ausgabeeinheit (7a) dazu eingerichtet ist, in Abhängigkeit von dieser Summe die Warnung auszugeben.

## Claims

1. Method for providing a predicative navigation function for a vehicle (1), in which
a current position (22) of the vehicle (1) is recorded,
without specifying a destination of a user, an intended route (20) is determined, wherein an intentional probability is determined for the intended route (20),
traffic data is recorded, which comprises disruption data on traffic disruption and the associated position (23) of the traffic disruptions,
if the intentional probability exceeds an intentional threshold, it is ascertained from the recorded traffic data whether a traffic disruption is relevant to the intended route (20) determined, and,
depending on the position of the vehicle relative to the position (23) of the traffic disruption ascertained, a warning is output, wherein
without specifying a destination of the user, a plurality of intended routes (20) is determined, wherein an intentional probability is determined for each of the intended routes (20),
**characterised in that**
the total of the intentional probabilities of the intended routes (20) is calculated for which a traffic disruption is relevant, and
the warning is output depending on this total.

2. Method according to claim 1,
**characterised in that**
the warning is not output permanently but is needs-based, wherein the need for the output is ascertained depending on the intentional probability for the intended route (20) determined.

3. Method according to any one of the preceding claims,
**characterised in that**
an alternative route (21) is determined depending on the traffic disruptions ascertained,
by means of the intended route (20) determined and the alternative route (21), a deviation position (C) on the intended route (20) is determined, wherein the alternative route (21) can be reached at the deviation position (C) by a deviation manoeuvre,
an alternative output (30) is generated, wherein the alternative output (30) comprises information on the alternative route (21), and
the alternative output (30) is output.

4. Method according to claim 3,
**characterised in that**
by means of the deviation position (C), an output position (E) on the intended route (20) is determined and
the alternative output (30) is output when the vehicle (1) reaches the output position (E).

5. Method according to claim 4,
**characterised in that**
before reaching the output position (E), the warning or an information message is generated and output.

6. Method according to claim 4 or 5,
**characterised in that**
the alternative output (30) is output by an output unit (7a),
wherein before reaching the output position (E) an output independent of a route guidance is output, wherein a warning symbol is indicated.

7. Method according to any one of claims 3 to 6,
**characterised in that**
the alternative output (30) comprises information on the intended route (20) and/or the alternative route (21), in particular on an ascertained destination (B) and/or on a difference between an ascertained travel time for the intended route (20) and an ascertained alternative travel time for the alternative route (21) and/or on a difference between an ascertained journey distance for the intended route (20) and an ascertained journey distance for the alternative route (21).

8. Method according to any one of claims 3 to 7,
**characterised in that**
the alternative output (30) comprises information on the traffic disruption (23) relevant to the intended route (20).

9. Method according to claim 8,
**characterised in that**
the alternative output (30) comprises at least one button (34, 35) and a user input by means of the button (34, 35) is recorded, by which a navigation along the alternative route (21) is started.

10. Method according to any one of claims 3 to 9,
**characterised in that**
at least one journey instruction for the deviation manoeuvre to reach the alternative route (21) is generated and
the alternative output (30) comprises the journey instruction.

11. Method according to any one of the preceding claims,
**characterised in that**
the intended route (20) is determined by means of data from a current journey and/or data from journeys and/or appointment data of a user recorded in the past and/or by means of event data.

12. Method according to any one of claims 7 to 11,
**characterised in that**
the ascertained travel time for the intended route (20) is determined by means of a travel time recorded in the past.

13. Navigation system for providing an adaptive route guidance for a vehicle (1) with
a recording unit (3), by which a current position (22) of the vehicle (1) and traffic data can be recorded, wherein the traffic data comprises disruption data about traffic disruptions and the associated position (23) of the traffic disruptions;
a route recognition unit (5), by which, without specifying a destination of a user, an intended route (20) can be determined, wherein an intentional probability can be determined for the intended route (20); a control unit (4), by which, if the intentional probability exceeds an intentional threshold, it can be determined from the recorded traffic data whether a traffic disruption is relevant to the intended route (20) determined, and
an output unit (7a) with which a warning can be output depending on the position of the vehicle relative to the position (23) of the ascertained traffic disruption, wherein
the control unit (4) is configured in such a way that without specifying a destination of the user, a plurality of intended routes (20) is determined, wherein an intentional probability is determined for each of the intended routes (20),
**characterised in that**
the control unit (4) is also configured in such a way that the total of the intentional probabilities of the intended routes (20) is to be calculated for which a traffic disruption is relevant, and
the output unit (7a) is configured to issue the warning depending on this total.

## Revendications

1. Procédé de fourniture d'une fonction prédictive de navigation pour un véhicule (1), selon lequel une position (22) actuelle du véhicule (1) est détectée, un itinéraire (20) intentionnel est déterminé, sans qu'un utilisateur prédéfinisse une destination, pour l'itinéraire (20) intentionnel, une probabilité intentionnelle étant déterminée,
des données de circulation étant détectées, lesquelles comprennent des données de perturbation sur des perturbations de circulation et une position (23) associée des perturbations de circulation,
lorsque la probabilité intentionnelle dépasse une valeur seuil intentionnelle, à partir des données de circulation détectées, il est déterminé si une perturbation de circulation est pertinente pour l'itinéraire (20) intentionnel déterminé, et,
en fonction de la position du véhicule par rapport à la position (23) de la perturbation de circulation déterminée, un avertissement est émis,
une pluralité d'itinéraires (20) intentionnels étant déterminée, sans que l'utilisateur prédéfinisse une destination, pour l'itinéraire (20) intentionnel respectif, une probabilité intentionnelle étant déterminée,
**caractérisé en ce que**
la somme des probabilités intentionnelles des itinéraires (20) intentionnels étant calculée, pour laquelle une perturbation de circulation est pertinente, et
en fonction de ladite somme, l'avertissement étant émis.

2. Procédé selon la revendication 1,
**caractérisé en ce que**
l'avertissement n'est pas émis en continu, mais en fonction du besoin, le besoin pour une sortie étant détecté en fonction de la probabilité intentionnelle pour l'itinéraire (20) intentionnel déterminé.

3. Procédé selon l'une quelconque des revendications précédentes,
**caractérisé en ce que**
en fonction des perturbations de circulation détectées, une route alternative (21) est déterminée,
en fonction de l'itinéraire (20) intentionnel déterminé et de la route alternative (21), une position de déviation (C) sur l'itinéraire (20) intentionnel est déterminée, dans la position de déviation (C), à l'aide d'une manœuvre de déviation, l'itinéraire alternatif (21) peut être atteint,
une sortie alternative (30) est générée, la sortie alternative (30) comprenant des informations sur la route alternative (21), et
la sortie alternative (30) est sortie.

4. Procédé selon la revendication 3,
**caractérisé en ce que**,
en fonction de la position de déviation (C), une position de sortie (E) sur l'itinéraire (20) intentionnel est déterminée et
la sortie alternative (30) est sortie lorsque le véhicule (1) atteint la position de sortie (E).

5. Procédé selon la revendication 4,
**caractérisé en ce que**
avant l'atteinte de la position de sortie (E), l'avertissement ou un message d'avertissement est généré et émis.

6. Procédé selon la revendication 4 ou 5,
**caractérisé en ce que**
la sortie alternative (30) est sortie par une unité de sortie (7a), avant l'atteinte de la position de sortie (E), une sortie indépendante du guidage d'itinéraire est sortie, un symbole d'avertissement étant affiché.

7. Procédé selon l'une quelconque des revendications 3 à 6,
**caractérisé en ce que**
la sortie alternative (30) comporte des informations sur l'itinéraire (20) intentionnel et/ou sur l'itinéraire alternatif (21), en particulier sur une destination (B) déterminée et/ou sur une différence entre un temps de voyage déterminé pour l'itinéraire (20) intentionnel et un autre temps de voyage déterminé pour l'itinéraire alternatif (21) et/ou à une différence entre un trajet de conduite déterminé pour l'itinéraire (20) intentionnel et un trajet de conduite déterminé pour l'itinéraire alternatif (21).

8. Procédé selon l'une quelconque des revendications 3 à 7,
**caractérisé en ce que**
la sortie alternative (30) comporte des informations sur la perturbation de circulation (23) pertinente pour l'itinéraire (20) intentionnel.

9. Procédé selon la revendication 8,
**caractérisé en ce que**
la sortie alternative (30) comporte au moins une touche (34, 35) et une entrée utilisateur est détectée à l'aide de la touche (34, 35), au moyen de laquelle la navigation le long de l'itinéraire alternatif (21) est démarrée.

10. Procédé selon l'une quelconque des revendications 3 à 9,
**caractérisé en ce que**
au moins une instruction de conduite pour la manœuvre de déviation pour atteindre l'itinéraire alternatif (21) est générée et
la sortie alternative (30) comporte l'instruction de conduite.

11. Procédé selon l'une quelconque des revendications précédentes,
**caractérisé en ce que**
l'itinéraire (20) intentionnel est déterminé en fonction des données d'une conduite actuelle et/ou des données de conduites détectées dans le passé et/ou des données de rendez-vous d'un utilisateur et/ou en fonction des données d'événement.

12. Procédé selon l'une quelconque des revendications 7 à 11,
**caractérisé en ce que**
le temps de voyage détecté pour l'itinéraire (20) intentionnel est déterminé en fonction d'un temps de voyage enregistré dans le passé.

13. Système de navigation permettant de fournir un guidage d'itinéraire adaptatif pour un véhicule (1) comprenant
une unité d'enregistrement (3), au moyen de laquelle une position (22) actuelle du véhicule (1) et des données de circulation peuvent être détectées, les données de circulation comprenant les données de perturbations sur les perturbations de circulation et la position (23) associée des perturbations de circulation ;
une unité de reconnaissance d'itinéraire (5), au moyen de laquelle, sans qu'un utilisateur prédéfinisse une destination, un itinéraire (20) intentionnel peut être déterminé, pour l'itinéraire (20) intentionnel, une probabilité intentionnelle pouvant être déterminée ;
une unité de commande (4), au moyen de laquelle, lorsque la probabilité intentionnelle dépasse une valeur seuil intentionnelle, il peut être déterminé à partir des données de circulation détectées si une perturbation de circulation est pertinente pour l'itinéraire (20) intentionnel déterminé, et
une unité de sortie (7a), au moyen de laquelle, en fonction de la position du véhicule par rapport à la position (23) de la perturbation de circulation déterminée, un avertissement peut être émis,
l'unité de commande (4) étant conçue pour déterminer, sans que l'utilisateur prédéfinisse une destination, une pluralité d'itinéraires (20) intentionnels, pour l'itinéraire (20) intentionnel respectif, une probabilité intentionnelle étant déterminée,
**caractérisé en ce que**
l'unité de commande (4) est en outre conçue pour calculer la somme des probabilités intentionnelles des itinéraires (20) intentionnels pour lesquels une perturbation de circulation est pertinente, et
l'unité de sortie (7a) est conçue pour émettre l'avertissement en fonction de ladite somme.
